(19) Europäisches Patentamt
European Patent Office
Office européen des brevets

(11) EP 4 468 246 A1

(12) EUROPEAN PATENT APPLICATION
published in accordance with Art. 153(4) EPC

(43) Date of publication:
27.11.2024 Bulletin 2024/48

(51) International Patent Classification (IPC):
G06T 13/20 (2011.01)          G06F 16/33 (2019.01)
G06F 16/432 (2019.01)

(21) Application number: 23742949.3

(22) Date of filing: 18.01.2023

(86) International application number:
PCT/CN2023/073010

(87) International publication number:
WO 2023/138634 (27.07.2023 Gazette 2023/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.01.2022 CN 202210061213

(71) Applicant: Hangzhou Alicloud Apsara Information
Technology
Co., Ltd.
Hangzhou, Zhejiang 311121 (CN)

(72) Inventors:
• MA, Yuankai
Hangzhou, Zhejiang 310030 (CN)
• ZHU, Pengcheng
Hangzhou, Zhejiang 310030 (CN)
• LUO, Zhiling
Hangzhou, Zhejiang 310030 (CN)
• ZHOU, Wei
Hangzhou, Zhejiang 310030 (CN)
• LI, Yu
Hangzhou, Zhejiang 310030 (CN)
• LI, Longlong
Hangzhou, Zhejiang 310030 (CN)

(74) Representative: Barker Brettell LLP
100 Hagley Road
Edgbaston
Birmingham B16 8QQ (GB)

(54) VIRTUAL HUMAN CONTROL METHOD, APPARATUS, DEVICE, AND STORAGE MEDIUM

(57) The present disclosure relates to a virtual character control method and apparatus, a device and a storage medium. In the present disclosure, one or more target keywords are acquired from a preset text, and a first target character and a second target character are determined from the preset text for each of the one or more target keywords, where the first target character corresponds to an action start position of the target keyword, and the second target character corresponds to an action end position of the target keyword. Further, an audio broadcasting duration from the first target character to the second target character is predicted, and a target action file is determined from one or more preset action files corresponding to the target keyword according to the audio broadcasting duration, so that a time duration of the target action video matches the audio broadcasting duration, where the target action video is obtained by driving, according to the target action file, the virtual character to perform a target action, thereby improving the expressiveness of the virtual character.

Acquiring one or more target keywords in a preset text — S101

For each of the one or more target keywords, determining a first target character and a second target character from the preset text, where the first target character corresponds to an action start position of the target keyword and the second target character corresponds to an action end position of the target keyword — S102

Predicting an audio broadcasting duration from the first target character to the second target character — S103

Determining a target action file from one or more preset action files corresponding to the target keyword, where the target action file is used for driving the virtual character to perform a target action to obtain a target action video, and a time duration of the target action video matches the audio broadcasting duration — S104

Driving the virtual character in real time according to audio information of the preset text and a respective target action file corresponding to each target keyword, to generate multimedia information, where the multimedia information includes the audio information and a respective target action video corresponding to each target keyword — S105

FIG. 1

## Description

The present application claims priority to Chinese patent application No. 202210061213. X, titled "VIRTUAL CHARACTER CONTROL METHOD, APPARATUS, DEVICE AND STORAGE MEDIUM" and filed with the China National Intellectual Property Administration on January 19, 2022, the content of which is incorporated into this application by reference in its entirety.

## TECHNICAL FIELD

The present disclosure relates to the field of information technology and, in particular, to a virtual character control method, an apparatus, a device and a storage medium.

## BACKGROUND

With the continuous development of science and technology, digital humans (which can also be referred as virtual humans) are widely used, for example, a digital human can be used to broadcast weather forecasts, news, advertisements, sports events and so on.

However, the inventor of this application found that audio information and pictures in multimedia information including the digital human cannot be well matched, which leads to the lack of expressiveness of the digital human.

## SUMMARY

In order to solve the above technical problems or at least partially solve the above technical problems, the present disclosure provides a virtual character control method and apparatus, a device and a storage medium, so as to ensure that a playing duration of each target action video in the multimedia information matches an audio broadcasting duration from a start position to an end position of a target action, and avoid a situation that an action of the virtual character is not finished when the broadcasting audio is finished, or the broadcasting audio is not finished after the playing of the action of the virtual character is over, thereby improving the expressiveness of the virtual character.

In a first aspect, an embodiment of the present disclosure provides a virtual character control method, including:

acquiring one or more target keywords in a preset text;

for each of the one or more target keywords, determining a first target character and a second target character from the preset text, where the first target character corresponds to an action start position of the target keyword and the second target character corresponds to an action end position of the target keyword;

predicting an audio broadcasting duration from the first target character to the second target character; determining a target action file from one or more preset action files corresponding to the target keyword, where the target action file is used for driving a virtual character to perform a target action to obtain a target action video, and a time duration of the target action video matches the audio broadcasting duration;

driving the virtual character in real time according to audio information of the preset text and a respective target action file corresponding to each target keyword to generate multimedia information, where the multimedia information includes the audio information and a respective target action video corresponding to each target keyword.

In a second aspect, an embodiment of the present disclosure provides a virtual character control apparatus, including:

a first acquiring module, configured to acquire one or more target keywords in a preset text; a first determining module, configured to determine a first target character and a second target character from the preset text for each of the one or more target keywords, where the first target character corresponds to an action start position of the target keyword and the second target character corresponds to an action end position of the target keyword; a predicting module, configured to predict an audio broadcasting duration from the first target character to the second target character; a second determining module, configured to determine a target action file from one or more preset action files corresponding to the target keyword, where the target action file is used for driving a virtual character to perform a target action to obtain a target action video, and a time duration of the target action video matches the audio broadcasting duration; a first generating module, configured to drive the virtual character in real time according to audio information of the preset text and a respective target action file corresponding to each target keyword, so as to generate multimedia information, where the multimedia information includes the audio information and a respective target action video corresponding to each target keyword.

In a third aspect, an embodiment of the present disclosure provides an electronic device, including:

a memory; a processor; and a computer program; where the computer program is stored in the memory and configured to be executed by the processor to implement the method as described in the first aspect.

In a fourth aspect, an embodiment of the present disclosure provides a computer readable storage medium on which a computer program is stored, and the computer program is executed by a processor to implement the method as described in the first aspect.

According to the virtual character control method and apparatus, device and storage medium provided by the embodiments of the present disclosure, one or more target keywords are acquired from a preset text, and a first target character and a second target character is determined from the preset text for each of the one or more target keywords, where the first target character corresponds to an action start position of the target keyword, and the second target character corresponds to an action end position of the target keyword. Further, an audio broadcasting duration from the first target character to the second target character is predicted, and a target action file is determined from one or more preset action files corresponding to the target keyword according to the audio broadcasting duration, so that a time duration of a target action video matches the audio broadcasting duration, where the target action video is obtained by driving the virtual character with the target action file to perform a target action. Therefore, as the virtual character is driven in real time according to the audio information of the preset text and the respective target action file corresponding to each target keyword to generate the multimedia information, the playing duration of each target action video in the multimedia information can be ensured to match the audio broadcasting duration from the start position to the end position of the target action, thus avoiding a situation that the action of the virtual character is not finished when the broadcasting audio is finished, or the broadcasting audio is not finished after the playing of the action of the virtual character is over, thus improving the expressiveness of the virtual character.

BRIEF DESCRIPTION OF DRAWINGS

The accompanying drawings, which are incorporated in and constitute a part of this specification, illustrate embodiments consistent with the present disclosure and together with the description, serve to explain the principles of the present disclosure.

In order to explain the technical scheme in the embodiments of the present disclosure or the prior art more clearly, the drawings needed in the description of the embodiments or the prior art will be briefly introduced below. Obviously, for those skilled in the art, other drawings can be obtained according to these drawings without paying creative effort.

FIG. 1 is a flowchart of a virtual character control method provided by an embodiment of the present disclosure.

FIG. 2 is a schematic diagram of an application scenario provided by an embodiment of the present disclosure.

FIG. 3 is a schematic diagram of a preset text provided by an embodiment of the present disclosure.

FIG. 4 is a schematic diagram of a preset text provided by an embodiment of the present disclosure.

FIG. 5 is a schematic diagram of a preset text provided by another embodiment of the present disclosure.

FIG. 6 is a flowchart of a virtual character control method provided by another embodiment of the present disclosure.

FIG. 7 is a schematic diagram of a preset text provided by another embodiment of the present disclosure.

FIG. 8 is a schematic diagram of a preset text provided by another embodiment of the present disclosure.

FIG. 9 is a schematic diagram of a preset text provided by another embodiment of the present disclosure.

FIG. 10 is a flowchart of a virtual character control method provided by another embodiment of the present disclosure.

FIG. 11 is a schematic diagram of a preset text provided by another embodiment of the present disclosure.

FIG. 12 is a flowchart of a virtual character control method provided by another embodiment of the present disclosure.

FIG. 13 is a flowchart of a virtual character control method provided by another embodiment of the present disclosure.

FIG. 14 is a flowchart of a virtual character control method provided by another embodiment of the present disclosure.

FIG. 15 is a schematic structural diagram of a virtual character control apparatus provided by an embodiment of the present disclosure.

FIG. 16 is a structural schematic diagram of an electronic device provided by an embodiment of the present disclosure.

DESCRIPTION OF EMBODIMENTS

In order to understand the above objects, features and advantages of the present disclosure more clearly, the scheme of the present disclosure will be further described below. It should be noted that the embodiments of the present disclosure and the features in the embodiments can be combined with each other without conflict.

In the following description, many specific details are set forth in order to fully understand the present disclosure, but the present disclosure may be practiced in other manners than those described herein. Obviously, the embodiments in the specification are only part of the embodiments of the present disclosure, not all of them.

With the continuous development of science and technology, digital humans (which can also be referred as virtual humans) are widely used, for example, a digital human can be used to broadcast weather forecasts, news, advertisements, sports events and so on. However, at present, audio information and pictures in the multimedia information including the digital human cannot be well matched, which leads to the lack of performance ability of the digital human. For example, when the broadcasting audio is finished, the action of the digital human is not finished yet, or the broadcasting audio is not finished after the playing of the action of the virtual character is over.

In order to solve this problem, the embodiments of the present disclosure provide a virtual character control method, which will be introduced in the following with specific embodiments.

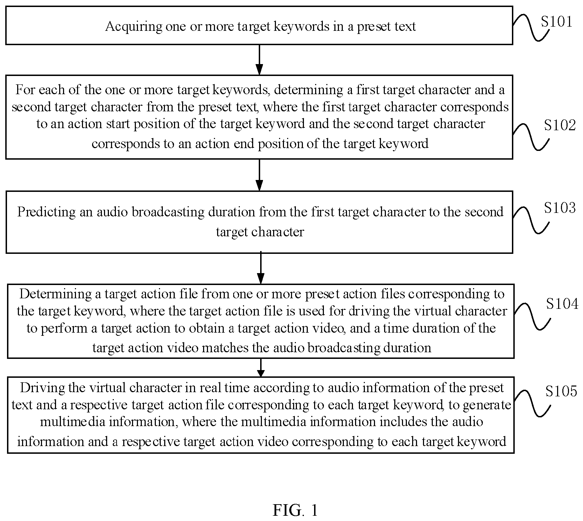

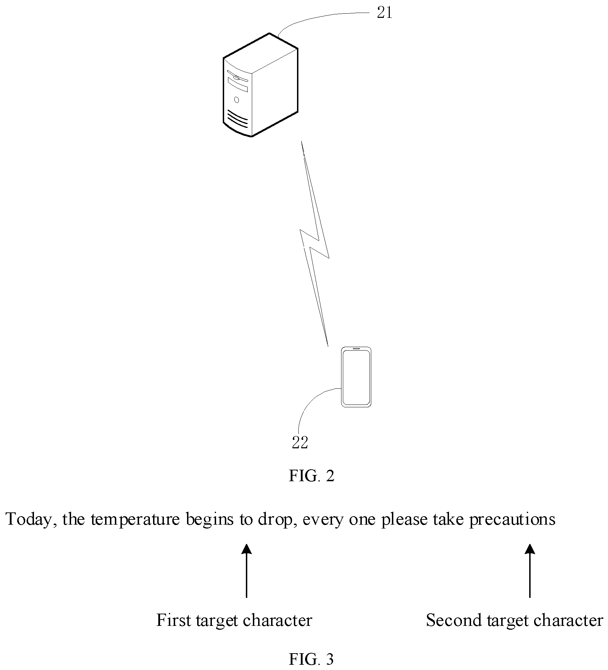

FIG. 1 is a flowchart of a virtual character control method provided by an embodiment of the present disclosure. The method can be executed by a virtual character control apparatus, which can be realized by software and/or hardware, and can be configured in an electronic device, such as a server or a terminal, where the terminal specifically includes a mobile phone, a computer or a tablet computer. This method can be applied to the application scenario shown in FIG. 2, which includes a server 21 and a terminal 22. The server 21 can generate multimedia information including the virtual character (avatar), the virtual character can be the digital human as mentioned above. The multimedia information may include audio information and video information, and the audio information may be an audio of the virtual character broadcasting a preset text. The video information may be a video of the virtual character performing a target action. Further, the server 21 can push the multimedia information to the terminal 22, so that the terminal 22 can play the multimedia information. Alternatively, the terminal 22 may generate the multimedia information. The specific process of generating the multimedia information by the server 21 is the same as the specific process of generating the multimedia information by the terminal 22. In the following, a schematic description is made by taking the generation of the multimedia information by the server 21 as an example. As shown in FIG. 1, the specific steps of this method are as follows.

S101. Acquiring one or more target keywords in a preset text.

For example, the preset text can be a current broadcasting document of the virtual character, and the type and specific content of the current broadcasting document are not limited in the embodiments of the present disclosure. For example, the current broadcasting document can be a text related to weather forecasts, news, advertisements, sports events and so on. Further, the server 21 can acquire target keyword(s) in the preset text, and it can be understood that the target keyword(s) in the preset text can be one or more. For example, the preset text is "This broadcast is over, goodbye", and the target keyword is "goodbye".

S102. For each of the one or more target keywords, determining a first target character and a second target character from the preset text, where the first target character corresponds to an action start position of the target keyword and the second target character corresponds to an action end position of the target keyword.

Specifically, each target keyword can correspond to an action. For example, the action corresponding to the target keyword "goodbye" is to raise and wave a hand. Therefore, for the respective action corresponding to each target keyword, the first target character and the second target character can be determined from the preset text, that is, a set of the first target character and the second target character can be obtained for each target keyword. Taking one of the target keywords as an example, a start position of an action corresponding to the target keyword corresponds to the first target character, and an end position of the action corresponding to the target keyword corresponds to the second target character. For example, taking the target keyword "goodbye" as an example, the first target character can be "is" in "This broadcast is over, goodbye", and the second target character can be "bye" in "This broadcast is over, goodbye", that is to say, when the virtual character broadcasts "is", he starts to raise his hand, and when the virtual character broadcasts "bye", he finishes waving. It can be understood that this embodiment does not limit the positions of the first target character and the second target character in the preset text, and positions here are illustrative and there are no specific limitations to such positions.

S103. Predicting an audio broadcasting duration from the first target character to the second target character.

For example, after determining the first target character and the second target character corresponding to a certain target keyword, the audio broadcasting duration from the first target character to the second target character can be further predicted.

S 104. Determining a target action file from one or more preset action files corresponding to the target keyword, where the target action file is used for driving the virtual character to perform a target action to obtain a target action video, and a time duration of the target action video matches the audio broadcasting duration.

For example, the server 21 may store a sample keyword set, and the sample keyword set may include a plurality of sample keywords. In addition, the server 21 can also store respective preset action file(s) corresponding to each of the plurality of sample keywords, specifically, one sample keyword can correspond to one or more preset action files. Specifically, the server 21 can query, from the sample keyword set, a sample keyword that best matches the target keyword according to the target keyword, and take one or more preset action files corresponding to the sample keyword as one or more preset action files corresponding to the target keyword. Further, the server 21 can predict the audio broadcasting duration from the first target character to the second target character according to the above steps, and determine the target action file from the one or more preset action files according to the audio broadcasting duration. Among them, the preset action file or the target action file can be an action skeleton point-position file, and an action video can be obtained from rendering based on the action skeleton point-position file, and the rendering process is also a process of driving the virtual character to perform action(s). Specifically, the target action file can drive the virtual character to perform the target action to obtain the target action video. The target action can be an action corresponding to the target keyword. Specifically, the target action file determined from the one or more preset action files needs to meet a condition that the time duration of the target action video matches the audio broadcasting duration, where the target action video is obtained by driving, according to the target action file, the virtual character to perform the target action.

S 105. Driving the virtual character in real time according to audio information of the preset text and a respective target action file corresponding to each target keyword, to generate multimedia information, where the multimedia information includes the audio information and a respective target action video corresponding to each target keyword.

For example, in this embodiment, the server 21 can also convert the preset text into audio information by using the text-to-speech (Text To Speech, TTS) technology. Further, the virtual character is driven in real time according to the audio information and the respective target action file corresponding to each target keyword in the preset text, thereby generating the multimedia information. Specifically, as different target keywords correspond to different target actions, different target action files can drive the virtual character to perform different target actions, thereby obtaining different target action videos, that is, a target action video can be obtained according to each target action file, so the multimedia information can include not only the audio information, but also the target action video obtained when each target action file drives the virtual character to perform the target action.

In the embodiment of the present disclosure, one or more target keywords are acquired from a preset text, and a first target character and a second target character is determined from the preset text for each of the one or more target keywords, where the first target character corresponds to an action start position of the target keyword, and the second target character corresponds to an action end position of the target keyword. Further, an audio broadcasting duration from the first target character to the second target character is predicted, and a target action file is determined from one or more preset action files corresponding to the target keyword according to the audio broadcasting duration, so that a time duration of a target action video matches the audio broadcasting duration, where the target action video is obtained by driving, with the target action file, the virtual character to perform a target action. Therefore, as the virtual character is driven in real time according to the audio information of the preset text and the respective target action file corresponding to each target keyword to generate the multimedia information, the playing duration of each target action video in the multimedia information can be ensured to match the audio broadcasting duration from the start position to the end position of the target action, thus avoiding a situation that the action of the virtual character is not finished when the broadcasting audio is finished, or the broadcasting audio is not finished after the playing of the action of the virtual character is over, thus improving the expressiveness of the virtual character.

It can be understood that in the embodiment of the present disclosure, the positions of the first target character and the second target character in the preset text are not limited, and several possible situations will be described below.

Optionally, the first target character is a first character of the target keyword, or the first target character is a character before the target keyword by a preset number of characters. The second target character is a last character of the target keyword, or the second target character is a last character of a sentence to which the target keyword belongs, or the second target character is a character before a next target keyword of the target keyword, or the second target character is a character after a last character of the target keyword by a preset number of characters.

For example, as shown in FIG. 3, the preset text is "Today, the temperature begins to drop, every one please take precautions", where "to drop" is the target keyword, the first target character can be the first character of the target keyword such as "to", and the second target character can be the last character of the sentence to which the target keyword belongs, such as "cautions". Alternatively, the first target character can be some character before "to", such as "today", and "today" and "to" are separated by a preset number of characters, with the preset number being determined according to a preset time duration (such as 1 second) and a speech speed of TTS audio broadcasting. In addition, the second target character can also be the last character of the target keyword, such as "drop", or the second target character can be a certain character after "drop", such as "one", and "drop" and "one" are separated by a preset number of characters.

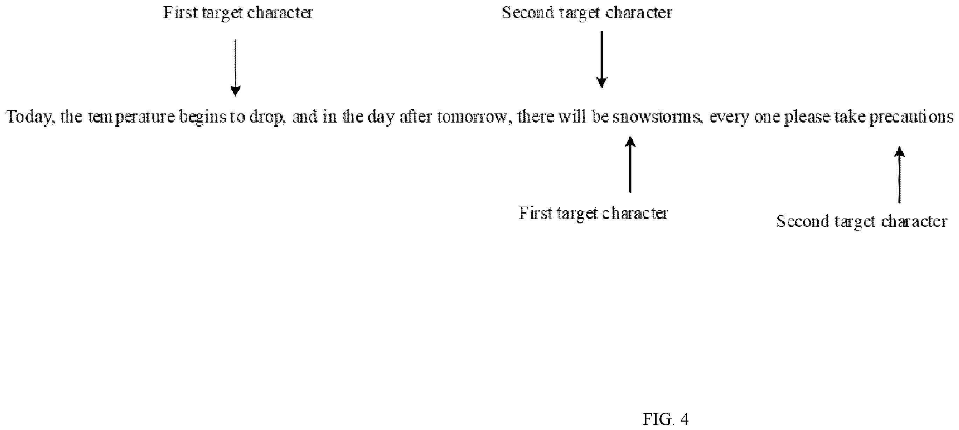

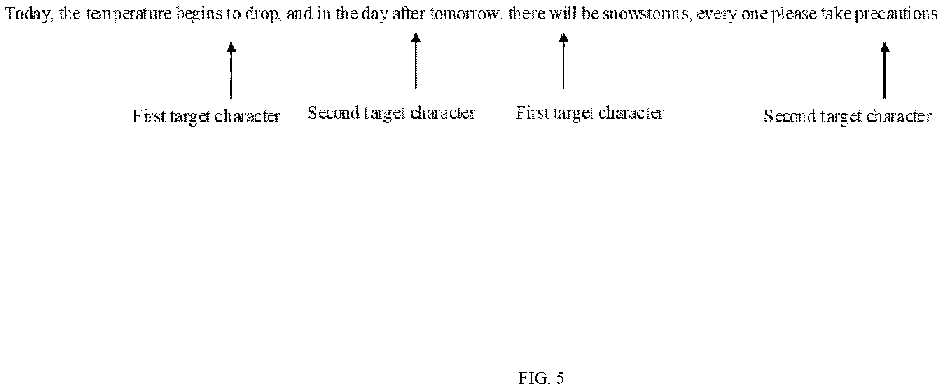

For example, as shown in FIG. 4, the preset text is "Today, the temperature begins to drop, and in the day after tomorrow, there will be snowstorms, every one please take precautions". The preset text includes two target keywords, one is "to drop" and the other is "snowstorms". For the "to drop", the first target character could be "to" and the second target character could be a character before the next target keyword (namely "snowstorms"), such as the second target character could be "be". For the "snowstorms", the first target character can be "snow" and the second target character can be "cautions". Similarly, for the "to drop", the first target character can also be a certain character before "to", such as "today", and the second target character can also be "drop" or a certain character after "drop", such as "after". Or as shown in FIG. 5, the first target character can be "drop" and the second target character can be "after" for "to drop". For the "snowstorms", the first target character can be a certain character before "snowstorms", such as "will", and the second target character can be "cautions".

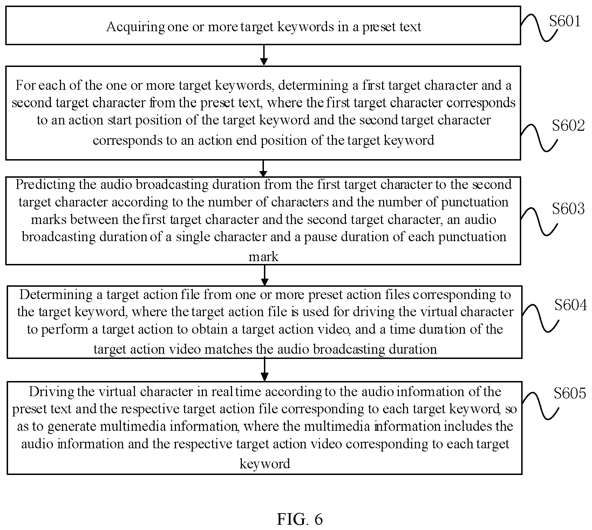

FIG. 6 is a flowchart of a virtual character control method provided by another embodiment of the present disclosure. The method includes the following steps as shown in FIG. 6.

S601. Acquiring one or more target keywords in a preset text.

Specifically, the implementation manners and specific principles of S601 and S101 are the same, which will not be repeated here.

S602. For each of the one or more target keywords, determining a first target character and a second target character from the preset text, where the first target character corresponds to an action start position of the target keyword and the second target character corresponds to an action end position of the target keyword.

Specifically, the implementation manners and specific principles of S602 and S102 are the same, which will not be repeated here.

S603. Predicting the audio broadcasting duration from the first target character to the second target character according to the number of characters and the number of punctuation marks between the first target character and the second target character, an audio broadcasting duration of a single character and a pause duration of each punctuation mark.

For example, taking FIG. 3 as an example, the number of non-punctuation characters between the first target character and the second target character is counted, for example, denoted as $c\_1$, and the time duration $t\_1$ of a single character by TTS broadcasting at present is calculated through experiments. In addition, as there would be pauses in TTS when punctuation marks (such as a commas, a period) appear in the process of the broadcasting of the preset text, for example, the pause duration is $t\_2$ when a comma appears and the pause duration is $t\_3$ when a period appears, thus, the number of punctuation marks between the first target character and the second target character can also be counted. For example, the number of commas is $c\_2$ and the number of periods is $c\_3$. Therefore, the audio broadcasting duration $t$ from the first target character to the second target character can be calculated, and $t$ can be calculated by the following formula (1):

$$t = c\_1 * t\_1 + c\_2 * t\_2 + c\_3 * t\_3 \quad (1)$$

S604. Determining a target action file from one or more preset action files corresponding to the target keyword, where the target action file is used for driving the virtual character to perform a target action to obtain a target action video, and a time duration of the target action video matches the audio broadcasting duration.

For example, as shown in FIG. 3, "to drop" is a target keyword, which corresponds to one or more preset action files. The logic for determining a target action file from multiple preset action files includes the following.

1) If the time duration of the action video obtained from rendering with each of one or more preset action files is greater than the above-mentioned $t$, a preset action file corresponding to an action video with the shortest time duration is taken as the target action file.
2) If the time duration of the action video obtained from rendering with by each preset action file is less than $t$, a preset action file corresponding to an action video with the longest time duration is taken as the target action file.

To sum up, the time duration of the target action video that can be obtained from rendering with the target action file is the closest to $t$.

S605. Driving the virtual character in real time according to the audio information of the preset text and the respective target action file corresponding to each target keyword, so as to generate multimedia information, where the multimedia information includes the audio information and the respective target action video corresponding to each target keyword.

It can be understood that although the time duration of the target action video that can be obtained from rendering with the target action file is the closest to $t$, the time duration of the target action video may not be exactly the same as $t$, for example, the time duration of the target action video may be greater than $t$ or less than $t$.

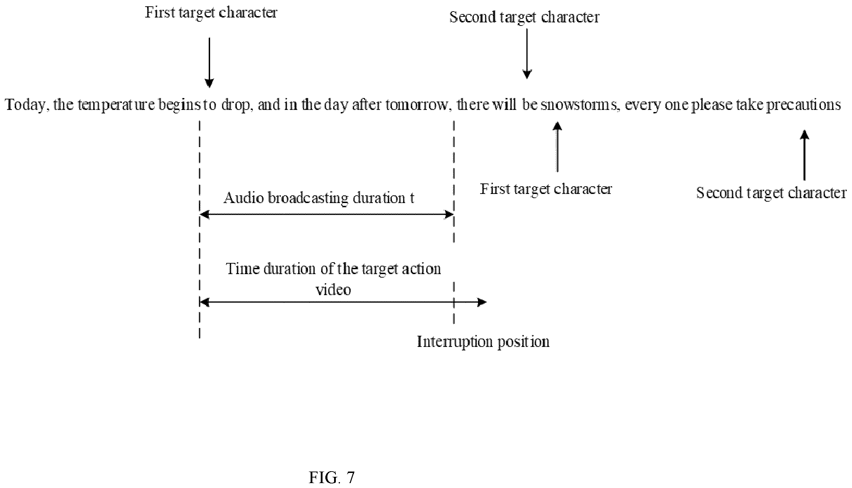

For example, as shown in FIG. 7, the preset text includes two target keywords, such as "to drop" and "snowstorms", and the respective target action file corresponding to each target keyword can be determined by using the above method. For example, the target action video corresponding to "to drop" can be obtained from rendering according to the target action file corresponding to "to drop", the target action video corresponding to "snowstorms" can be obtained from rendering according to the target action file corresponding to "snowstorms". As "to drop" and "snowstorms" are different target keywords, the target action videos corresponding to "to drop" and "snowstorms" may be different. In addition, "to drop" and "snowstorms" are two adj acent target keywords, thus, the target action videos corresponding to "to drop" and "snowstorms" respectively can be played continuously. However, the time duration of the target action video corresponding to "to drop" may be greater than or less than t, and the time duration of the target action video corresponding to "snowstorms" may also be greater than or less than the audio broadcasting duration from "storm" to "cautions". Therefore, some flexible adjustments need to be taken, which are introduced in the following under different situations.

In a feasible implementation, the driving the virtual character in real time according to the audio information of the preset text and the respective target action file corresponding to each target keyword to generate the multimedia information includes: if the time duration of the target action video corresponding to the target keyword is greater than the audio broadcasting duration, adjusting, according to the audio broadcasting duration, a time duration of driving the virtual character with the target action file corresponding to the target keyword, so that the time duration of driving the virtual character with the target action file is the same as the audio broadcasting duration; driving the virtual character in real time according to the audio information of the preset text, the respective target action file corresponding to each target keyword, and the time duration of driving the virtual character with each target action file, to generate the multimedia information.

For example, as shown in FIG. 7, t represents the audio broadcasting duration from "to" to "be". If the time duration of the target action video obtained from rendering with the target action file corresponding to "to drop" is greater than t, the target action video will not be over when the audio broadcasting from "to" to "be" is finished. Therefore, the time duration of driving the virtual character with the target action file corresponding to "to drop" can be adjusted according to t, so that the time duration of driving the virtual character with the target action file can be the same as t. That is to say, the driving time of the target action file can be controlled to be shorter to reduce the playing duration of the target action video. For example, when the time duration of driving a virtual character according to the target action file corresponding to "to drop" reaches t, the virtual character can be driven according to the target action file corresponding to "snowstorms" immediately, so that the target action video corresponding to "to drop" can be interrupted by the target action video corresponding to "snowstorms" at an interruption position as shown in FIG. 7. In the same way, the time duration of driving the virtual character with the target action file corresponding to the "snowstorms" can be determined. Further, the virtual character is driven in real time according to the audio information of the preset text, the respective target action file corresponding to each target keyword, and the time duration of driving the virtual character with each target action file, so as to generate the multimedia information. As shown in FIG. 7, the virtual character can broadcast "today, the temperature begins" in a default posture. In the process of broadcasting "to drop, and in the day after tomorrow, there will be" by the virtual character, the virtual character can perform the target action corresponding to "to drop". In the process of broadcasting "snowstorms, every one please take precautions" by the virtual character, the virtual character can perform the target action corresponding to the "snowstorms".

In another feasible implementation, the driving the virtual character in real time according to audio information of the preset text and a respective target action file corresponding to each target keyword to generate multimedia information includes: if the time duration of the target action video corresponding to the target keyword is less than the audio broadcasting duration, determining a time duration of driving the virtual character with a default action file, where the time duration of driving the virtual character with the default action file is a difference value between the audio broadcasting duration and the time duration of the target action video; driving the virtual character in real time according to the audio information of the preset text, the respective target action file corresponding to each target keyword and the default action file, to generate the multimedia information.

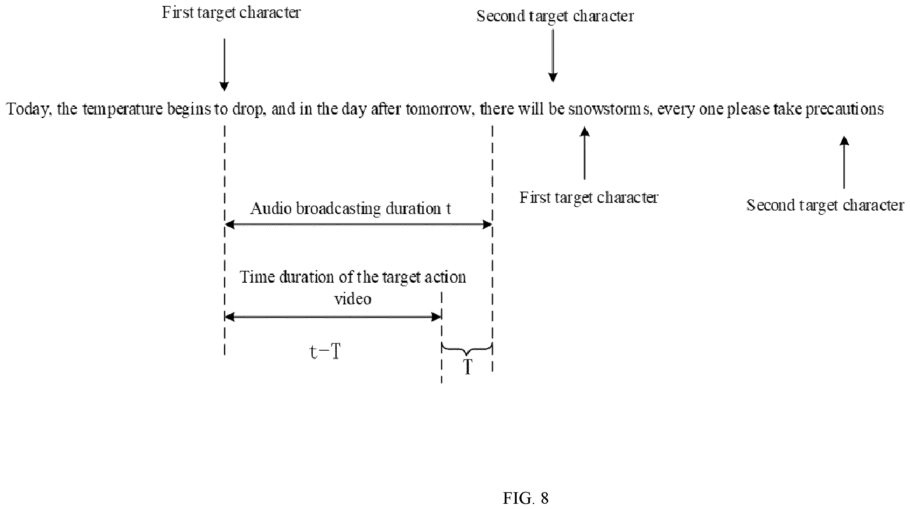

As shown in FIG. 8, t represents the audio broadcasting duration from "to" to "be", but the time duration of the target action video that can be obtained from rendering with the target action file corresponding to "to drop" is less than t, which will result in that when the playing of the target action video has been finished, the broadcasting of the audio from "to" to "be" has not finished. Therefore, according to the difference value T between t and the time duration of the target action video, the time duration of driving the virtual character with the default action file can be determined, so that the time duration of driving the virtual character with the default action file is T. Specifically, the default action file can drive the virtual character to perform a default action, or under the driving of the default action file, the virtual character keeps a default posture. Further, the virtual character is driven in real time according to the audio information of the preset text, the target action file corresponding to "to drop", the default action file and the target action file corresponding to "snowstorms" to generate the multimedia information.

Optionally, the default action file drives the virtual character after the target action file corresponding to the target keyword; or the default action file drives the virtual character before the target action file corresponding to the target keyword.

For example, the default action file can drive the virtual character after the target action file corresponding to "to drop". In this case, as shown in FIG. 8, the virtual character can broadcast "today, the temperature begins" in the default posture. In the time of t-T, the virtual character performs the target action corresponding to "to drop". During the time of T, the virtual character performs the default action or maintains the default posture. In the process of broadcasting "snowstorms, every one please take precautions" by the virtual character, the virtual character performs the target action corresponding to "snowstorms".

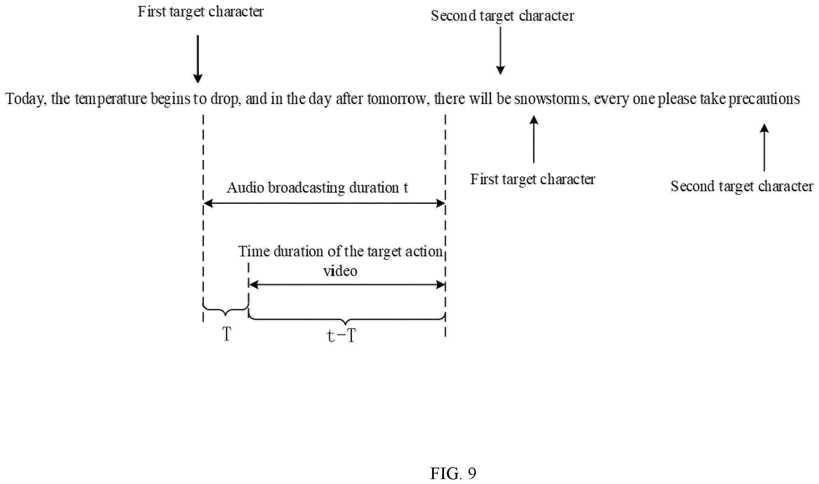

In other embodiments, the default action file can also drive the virtual character before the target action file corresponding to "to drop". In this case, as shown in FIG. 9, the virtual character can broadcast "today, the temperature begins" in the default posture. In the time of T, the virtual character performs the default action or maintains the default posture. In the time of t-T, the virtual character performs the target action corresponding to "to drop". In the process of broadcasting "snowstorms, everyone please take precautions" by the virtual character, the virtual character performs the target action corresponding to "snowstorms".

In this embodiment, the target action file is determined from one or more preset action files according to the audio broadcasting duration, so that the time duration of the target action video obtained from rendering according to the target action file matches the audio broadcasting duration. Compared with the strategy of randomly selecting the preset action file, in this embodiment, the problem that the expressiveness of the virtual character decreases due to the mismatch between the time duration of the target action video and the audio broadcasting duration can be avoided. In addition, in this embodiment, on the basis that the time duration of the target action video obtained from rendering according to the target action file matches the audio broadcasting duration, it is further determined that the time duration of the target action video is greater than or less than the audio broadcasting duration. If the time duration of the target action video is greater than the audio broadcasting duration, the time duration of driving the virtual character with the target action file can be reduced, so that the time duration of driving the virtual character with the target action file is the same as the audio broadcasting duration. If the time duration of the target action video is less than the audio broadcasting duration, the virtual character can be driven with the default action file before or after the target action video, so that the target action videos corresponding to two adjacent target keywords respectively can be connected in smooth, and the expressiveness of the virtual character can be further improved.

It can be understood that if there is no target keyword in the preset text, the virtual character can broadcast the preset text by the default action or by keeping the default posture.

In addition, in some cases, there is a target key character in the target keyword and a key frame in the target action video. If a broadcasting moment of an audio of the target key character can be aligned with a playing moment of the key frame, the expressiveness of the virtual character can be further improved, which will be explained with specific examples.

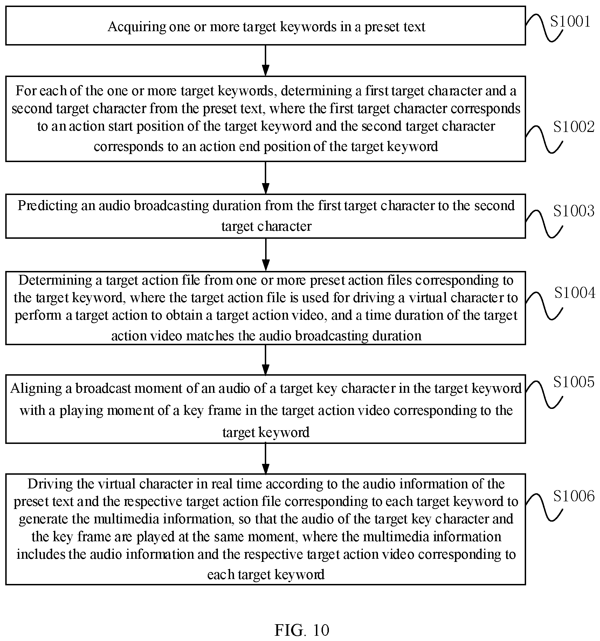

FIG. 10 is a flowchart of a virtual character control method provided by another embodiment of the present disclosure. The method specifically includes the following steps as shown in FIG. 10.

S1001. Acquiring one or more target keywords in a preset text.

Specifically, the implementation manners and specific principles of S1001 and S101 are the same, which will not be repeated here.

S1002. For each of the one or more target keywords, determining a first target character and a second target character from the preset text, where the first target character corresponds to an action start position of the target keyword and the second target character corresponds to an action end position of the target keyword.

Specifically, the implementation manners and specific principles of S1002 and S102 are the same, which will not be repeated here.

S1003. Predicting an audio broadcasting duration from the first target character to the second target character.

Specifically, the implementation manners and specific principles of S1003 and S103 are the same, which will not be repeated here.

S1004: Determining a target action file from one or more preset action files corresponding to the target keyword, where the target action file is used for driving a virtual character to perform a target action to obtain a target action video, and a time duration of the target action video matches the audio broadcasting duration.

Specifically, the implementation manners and specific principles of S1004 and S104 are the same, which will not be repeated here.

S1005 : Aligning a broadcast moment of an audio of a target key character in the target keyword with a playing moment of a key frame in the target action video corresponding to the target keyword.

For example, the preset text is "The athlete got the highest score in the whole game today, and the key to high score lies in this one action has been completed", in which "this one" is the target keyword and "this" is the target key character among the target keyword. The target action corresponding to "this one" can be a referential action, which can be a process from raising one's hand to pointing at a specific object. The key frame in the target action video corresponding to "this one" is a frame in which the finger of the virtual character points to the athlete's high-scoring action. Therefore, in order to further improve the expressiveness of the virtual character, the broadcasting moment of the audio of "this" can be aligned with the playing moment of this key frame. That is to say, while the virtual character broadcasts the character "this", the playing of the target action video just reaches the key frame.

Optionally, the multimedia information includes the audio information and a virtual character broadcasting video, the virtual character broadcasting video includes a target action video corresponding to each target keyword respectively, and the virtual character broadcasting video corresponds to the preset text. An initial broadcasting moment of the audio information is delayed by a preset time duration compared with an initial broadcasting moment of the virtual character broadcasting video.

For example, different from an offline synthesized video, it is impossible to predict in advance a specific moment when a character will be broadcast in the current TTS audio broadcasting in the scenario of driving the virtual character in real time, but it is possible to predict, from the current moment, when a certain character will be broadcast.

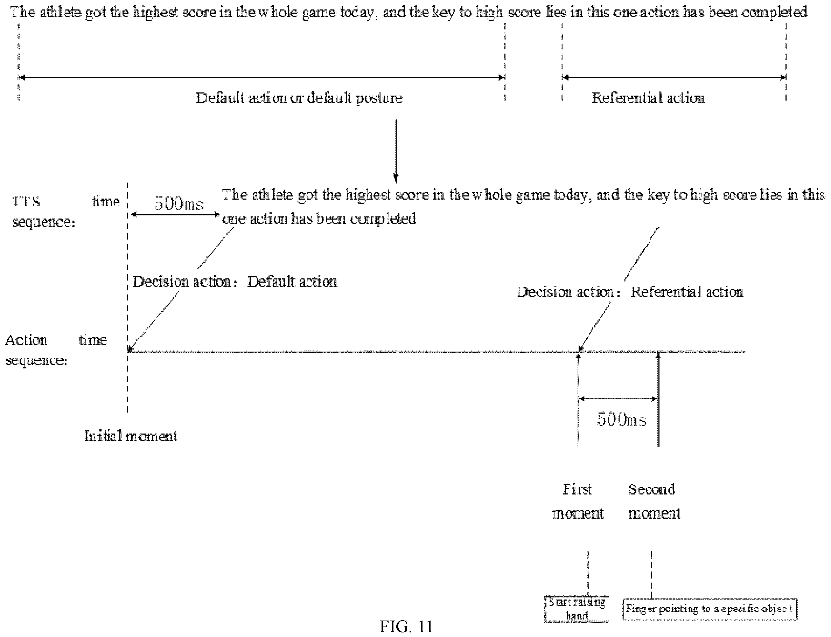

As shown in FIG. 11, a TTS time sequence indicates the audio broadcasting time sequence of each character in the preset text. An action time sequence represents a broadcasting time sequence of each frame in the virtual character broadcasting video. Understandably, the preset text includes the target keyword, and the target action file corresponding to the target keyword can drive the virtual character to perform the target action so as to obtain the target action video. However, for a part other than the content from the first target character to the second target character, for example, "today, the temperature begins" as shown in FIG. 7, the virtual character is required to broadcast with a default action or a default posture. In this embodiment, the virtual character broadcasting video may be a complete video rendered during the complete broadcast of the preset text. Therefore, the virtual character broadcasting video can include the video broadcast by the virtual character with the default action or default posture, as well as the target action video. It can be understood that when the preset text includes a plurality of target keywords, the virtual character broadcasting video may include target action videos corresponding to the target keywords respectively. The final multimedia information generated by the server 21 includes the audio information of the preset text and the virtual character broadcasting video.

For example, as shown in FIG. 11, the preset text is "the athlete got the highest score in the whole game today, and the key to high score lies in this one action has been completed", in which "this one" is the target keyword, for example, the first target character corresponding to "this one" is "this" and the second target character is "action". According to the above method, the target action file corresponding to "this one" can be determined. In addition, the default action file corresponding to the content from the first "the" to "in" can also be determined. That is to say, through the above method, it can be determined that the virtual character broadcasts the content from the first "the" to "in" with the default action or a default posture, and broadcasts the content from "this" to "action" with the referential action. That is to say, when the virtual character broadcasts the content from the first "the" to "in", the default action video or the default posture video can be obtained from rendering, and when the virtual character broadcasts the content from "this" to "action", the target action video, such as the referential action, can be obtained from rendering. The referential action can be the process from raising one's hand to pointing at a specific object. If the virtual character starts to raise his hand only at the moment when "this" is broadcast, it will cause the broadcasting moment of the audio of "this" to be misaligned with the playing moment of the key frame in the target action video. Therefore, in order to align the broadcasting moment of the audio of "this" with the playing moment of the key frame in the target action video, in the embodiment of the present disclosure, it can be specified that the time duration from the start frame of the target action video including the key frame to the key frame is a preset time duration, for example, 500 ms, and a broadcasting start moment of the audio information of the preset text is delayed by 500 ms compared with a broadcasting start moment of the virtual character broadcasting video. As shown in FIG. 11, the initial moment is the broadcasting start moment of the virtual character broadcasting video, the broadcasting start moment of the audio information of the preset text is the broadcasting moment of the character of the first "the", and the broadcasting moment of the first "the" is delayed by 500 ms compared with the initial moment.

Optionally, the aligning the broadcasting moment of the audio of the target key character in the target keyword with the playing moment of the key frame in the target action video corresponding to the target keyword includes: predicting whether to play the target key character at a second moment after the first moment, where the time duration between the first moment and the second moment is a preset time duration. If the target key character is to be played at the second moment, the playing moment of the start frame of the target action video corresponding to the target keyword is aligned with the first moment, and the time duration between the start frame and the key frame is the preset time duration.

For example, from the initial moment shown in FIG. 11, it can be predicted in real time whether the target key character will be played 500 ms after the current moment. Assuming that the current moment is the first moment shown in FIG. 11, it can be predicted whether the target key character "this" will be played at the second moment after the first moment, where the time duration between the first moment and the second moment is 500 ms. If it is predicted that the target key character "this" will be played at the second moment, the playing moment of the start frame (i.e. the first frame) of the target action video will be aligned with the first moment, so that the target action video can be played from the first moment. Since the time duration from the start frame to the key frame of the target action video is also 500 ms, the playing of the audio information will just reach the character "this" after 500 ms from the first moment, and the playing of the target action video will just reach the key frame, so that the broadcasting moment of the audio of "this" aligns with the playing moment of the key frame at the second moment. For example, as shown in FIG. 11, the virtual character broadcasts the character "to" at the first moment, and starts to raise his hand at the first moment. With the continuous raising of the hand, when the hand reaches the highest point, the finger of the virtual character points to the specific object, and the time duration from the beginning of raising his hand to the finger pointing to the specific object is 500 ms. That is to say, the first moment is a moment to start the execution of the referential action, and the second moment is a moment that the execution of the referential action reaches the key position (for example, the finger points to a specific object).

It can be understood that the time duration of a target action video including a key frame can be greater than or equal to 500 ms. For example, taking the time duration of the target action video being greater than 500 ms as an example, since the time duration from the start frame of the target action video to the key frame is 500 ms, when the playing of the target action video reaches the key frame, the key frame can be maintained for a period of time, for example, for 1-2 seconds.

S1006. Driving the virtual character in real time according to the audio information of the preset text and the respective target action file corresponding to each target keyword to generate the multimedia information, so that the audio of the target key character and the key frame are played at the same moment, where the multimedia information includes the audio information and the respective target action video corresponding to each target keyword.

Specifically, the implementation manners and specific principles of S1006 and S105 are the same, which will not be repeated here.

In this embodiment, the initial broadcasting moment of the audio information of the preset text is delayed by the preset time duration compared with the initial broadcasting moment of the virtual character broadcasting video, for example, by a 500 ms TTS dislocation, so that the alignment between the audio of the target key character and the key frame in the target action video is effectively achieved. Compared with a misaligned virtual character, aligning the broadcasting moment of the audio of the target key character in the target keyword with the playing moment of the key frame in the target action video corresponding to the target keyword can improve the expressiveness of the virtual character more obviously.

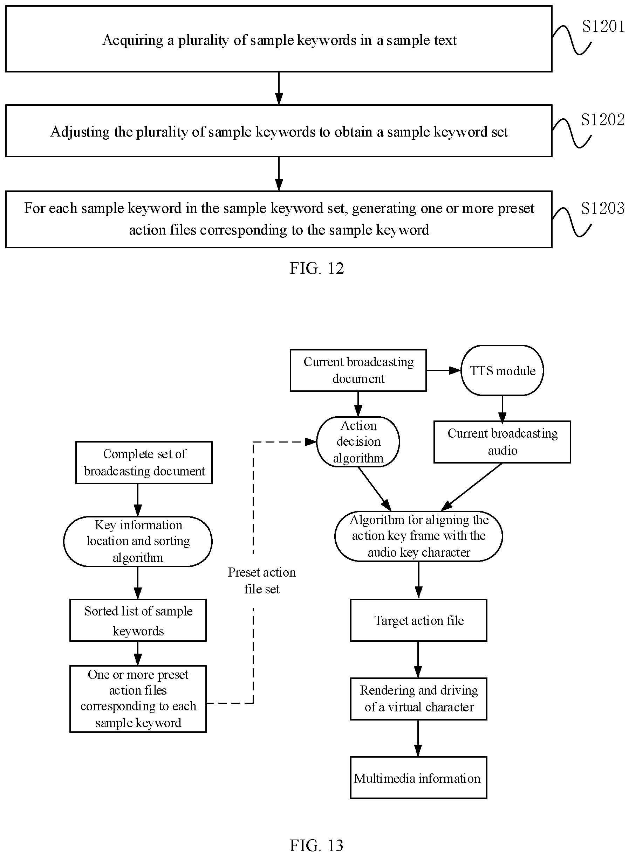

On the basis of the above embodiments, the virtual character control method provided by the embodiments of the present disclosure further includes the following steps as shown in FIG. 12.

S1201. Acquiring a plurality of sample keywords in a sample text.

For example, the server 21 can acquire all possible broadcasting documents of the virtual character, and all possible broadcasting documents can be indicated as sample texts. For example, the sample texts can be a historical broadcasting document, and the number of the historical broadcasting document(s) can be one or more. Further, key information such as keywords in the sample text is extracted, so as to obtain a plurality of sample keywords in the sample text. In addition, for different kinds of virtual characters, the type of the sample text can also be different. For example, for a virtual character of weather broadcast, the sample text can include more weather information, so that the actions of the virtual character can be strongly related to the weather information. For the virtual characters of customer service, the sample text can include more customer-related content.

Optionally, the acquiring a plurality of sample keywords in the sample text includes: performing word segmentation processing on the sample text to obtain a plurality of word segmentations; sorting the plurality of word segmentations to obtain a first sequence, where a ranking position of the word segmentation in the first sequence is related to a word frequency and an importance of the word segmentation; selecting, according to the ranking position of each word segmentation in the first sequence, at least some word segmentations from the first sequence as the plurality of sample keywords.

For example, word segmentation processing can be performed on the sample text to get a plurality of word segmentations. Further, a text weighted sorting algorithm is adopted to sort the plurality of word segmentations, specifically, the text weighted sorting algorithm can be an index of term frequency-inverse document frequency (term frequency-inverse document frequency, TF-IDF). The text weighted sorting algorithm can sort the plurality of the word segmentations according to the word frequency (such as the number of occurrence of the word segmentation), the importance and other information of each of the plurality word segmentations, to obtain the first sequence, in which a word segmentation with a higher word frequency and a higher importance can be ranked in a front position of the first sequence. Further, the first n word segmentations in the first sequence can be used as the sample keywords, and the value of n is not limited here.

S1202. Adjusting the plurality of sample keywords to obtain a sample keyword set.

For example, the n sample keywords determined above can be adjusted to obtain the sample keyword set.

Optionally, the adjusting the plurality of sample keywords to obtain the sample keyword set includes: adding sample keyword(s) on the basis of the plurality of sample keywords, and adjusting the ranking position of each sample keyword to obtain a second sequence; selecting at least some sample keywords from the second sequence to obtain the sample keyword set.

For example, on the basis of the above-mentioned n sample keywords, the ranking of several sample keywords in the n sample keywords can be adjusted. For example, in the application scenario of weather forecast, the weather-related sample keywords such as "snowstorms" and "cloudy" in the n sample keywords can be adjusted to be in the front ranking positions to reflect the importance of such sample keywords. Alternatively, new sample keywords can be added on the basis of the above n sample keywords, and the new sample keywords can be added according to the demands, for example, frequently used sample keywords such as "Bye-bye" and "Hello" can be added. For example, the number of the newly added sample keywords is m, and further, the order of the n+m sample keywords can be adjusted to obtain the second sequence. Or, referential sample keywords such as "this one", "this", "these" and "that" can also be added. When the virtual character broadcasts these sample keywords, it often means emphasizing the information following them. Therefore, these sample keywords can also be placed in a relatively front ranking position. Further, at least some sample keywords are selected from the second sequence to obtain the sample keyword set. This sample keyword set can be referred as a sample keywords list.

S1203. For each sample keyword in the sample keyword set, generating one or more preset action files corresponding to the sample keyword.

For example, according to each sample keyword in the sample keyword set, identification information of the sample keyword can be generated. In addition, as a sample keyword can correspond to an action, the identification information of each sample keyword can also be an action tag of the action corresponding to the sample keyword, and action tags corresponding to the sample keywords respectively can form an action tag set. Specifically, an action corresponds to an action tag, and a sample keyword corresponds to an action tag. Further, for each sample keyword in the sample keyword set, one or more preset action files corresponding to the sample keyword can be generated, so that an action tag can correspond to one or more preset action files. For example, the action tags set can be denoted as L, and the action tag set includes multiple action tags, such as L_1, L_2, ..., L _ n. Taking L_i as an example, the plurality preset action files corresponding to L_i can be denoted as L_i1, L_i2, ..., L_im. In addition, a default action file can be generated, which can be denoted as L_idle.

In a feasible implementation, the generating one or more preset action files corresponding to the sample keyword includes: recording one or more action videos including real character(s) according to the action(s) corresponding to the sample keyword; generating a preset action file corresponding to each action video including the real character, respectively.

For example, for each sample keyword in the sample keyword set, one or more action videos including the real character can be recorded according to the action(s) corresponding to the sample keyword, and further, a preset action file can be generated according to skeletal changes of the real character in each action video including the real character, that is, one preset action file can be generated according to one action video of the real character, so as to obtain one or more preset action files corresponding to the sample keyword.

In another feasible implementation, the generating one or more preset action files corresponding to the sample keyword includes: generating one or more preset action files according to the action(s) corresponding to the sample keyword.

For example, for each sample keyword in the sample keyword set, the skeletal change of the virtual character can be generated according to the action corresponding to the sample keyword, thereby generating one or more preset action files corresponding to the sample keyword.

Optionally, in the step S104, the determining the target action file from one or more preset action files corresponding to the target keyword includes: determining a sample keyword matching the target keyword from the sample keyword set and determining the target action file from one or more preset action files corresponding to the sample keyword.

For example, the server 21 may store a sample keyword set, which may include a plurality of sample keywords. In addition, the server 21 can also store preset action file(s) corresponding to each of the plurality of sample keywords, specifically, one sample keyword can correspond to one or more preset action files. Specifically, the server 21 can query a sample keyword that best matches the target keyword from the sample keyword set according to the target keyword, and take one or more preset action files corresponding to the sample keyword as one or more preset action files corresponding to the target keyword. Further, the server 21 can determine the target action file from the one or more preset action files.

Compared with a manner that the key information in the document and the key action set of the virtual character are specified by people in advance, in this embodiment, an algorithm is adopted to automatically extract the sample keywords in the sample text and sort the sample keywords, so that the sample keywords are more accurate and comprehensive. Therefore, the problem of poor expressiveness caused by the serious limitation of optional actions of the virtual character can be avoided.

As shown in FIG. 13, which is a flowchart of an overall scheme provided by an embodiment of the present disclosure. Among them, the complete set of the broadcasting document can be the sample text as mentioned above. The key information locating and sorting algorithm can realize the process of extracting and sorting the sample keywords as mentioned above. The sorted list of the sample keywords may be the sample keyword set as described above. As one sample keyword corresponds to one or more preset action files, one or more preset action files corresponding to each sample keyword in the sample keyword set can form a preset action file set. The current broadcasting document can be the preset text as mentioned above. A TTS module can convert the preset text into the audio information, for example, the current broadcasting audio. The action decision algorithm can realize the process of determining the target action file from one or more preset action files corresponding to the target keyword. The algorithm for aligning the action key frame with the audio key character can realize the process of aligning the broadcasting moment of the audio of the target key character in the target keyword with the playing moment of the key frame in the target action video corresponding to the target keyword. Rendering and driving of a virtual character can refer to obtaining the action video by rendering with unity. In this way, the aligned audio information and the action video constitute the multimedia information.

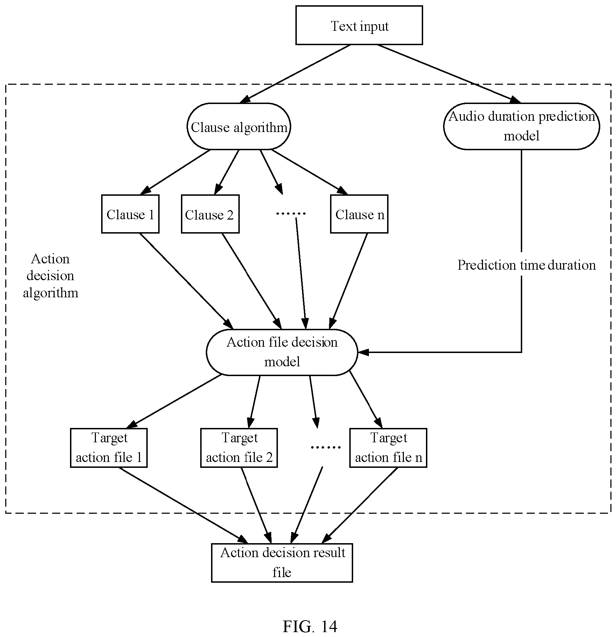

FIG. 14 is a flowchart of an action decision algorithm provided by an embodiment of the present disclosure. Specifically, the text input can be the current broadcasting document shown in FIG. 13. The current broadcasting document can include multiple sentences, and further, the current broadcasting document is divided into n sentences by a clause algorithm, and each sentence is a clause. For a target keyword in each clause, the audio duration prediction model can predict the audio broadcasting duration t from the first target character to the second target character corresponding to the target keyword, and t can also be denoted as the prediction time duration. Assume that each clause includes a target keyword. For the target keyword in each clause, the action file decision model can determine, from one or more preset action files corresponding to the target keyword, the target action file according to the audio broadcasting duration from the first target character to the second target character corresponding to the target keyword. For example, the target action file 1 is determined for the target keyword in clause 1, the target action file 2 is determined for the target keyword in clause 2, and so on, and the target action file n is determined for the target keyword in clause n. Further, n target action files can be packaged together in the format of JavaScript Object Notation (JavaScript Object Notation) to obtain an action decision result file shown in FIG. 14. In addition, in some other embodiments, when a clause includes multiple target keywords, the action decision algorithm can also decide whether target action videos corresponding to respective target keywords can be interrupted by each other according to positions of the respective target keywords in the clause.

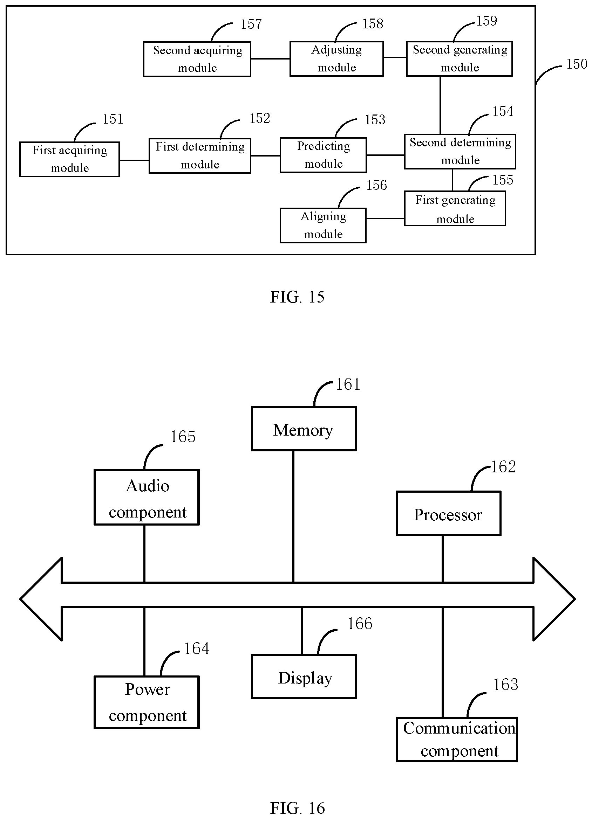

FIG. 15 is a schematic structural diagram of a virtual character control apparatus provided by an embodiment of the present disclosure. The virtual character control apparatus provided by the embodiment of the present disclosure can execute the processing flow provided by the embodiments of the virtual character control method. As shown in FIG. 15, the virtual character control apparatus 150 includes:

a first acquiring module 151, configured to acquire one or more target keywords in a preset text;
a first determining module 152, configured to determine a first target character and a second target character from the preset text for each of the one or more target keywords, where the first target character corresponds to an action start position of the target keyword and the second target character corresponds to an action end position of the target keyword;
a predicting module 153, configured to predict an audio broadcasting duration from the first target character to the second target character;
a second determining module 154, configured to determine a target action file from one or more preset action files corresponding to the target keyword, where the target action file is used for driving a virtual character to perform a target action to obtain a target action video, and a time duration of the target action video matches the audio broadcasting duration;
a first generating module 155, configured to drive the virtual character in real time according to audio information of the preset text and a respective target action file corresponding to each target keyword, so as to generate multimedia information, where the multimedia information includes the audio information and a respective target action video corresponding to each target keyword.

Specifically, the positions of the first target character and the second target character in the preset text can be flexibly selected. For example, there would be the following possibilities. The first target character is a first character of the target keyword, or the first target character is a character before the target keyword by the preset number of characters. The second target character is a last character of the target keyword, or the second target character is a last character of a sentence to which the target keyword belongs, or the second target character is a character before the next target keyword of the target keyword, or the second target character is a character after the last character of the target keyword by a preset number of characters.

Optionally, when the predicting module 153 predicts the audio broadcasting duration from the first target character to the second target character, the predicting module 153 is specifically configured to: predict the audio broadcasting duration from the first target character to the second target character according to the number of characters and the number of punctuation marks between the first target character and the second target character, an audio broadcasting duration of a single character and a pause duration of each punctuation mark.

In addition, the time duration of the target action video corresponding to the target keyword may not be exactly the same as the audio broadcasting duration, so some flexible adjustments can be taken at this time.

In one possible implementation, when the first generating module 155 drives the virtual character in real time according to the audio information of the preset text and the respective target action file corresponding to each target keyword to generate the multimedia information, it is specifically configured to: if the time duration of the target action video corresponding to the target keyword is greater than the audio broadcasting duration, adjust, according to the audio broadcasting duration, a time duration of driving the virtual character with the target action file corresponding to the target keyword, so that the time duration of driving the virtual character with the target action file is the same as the audio broadcasting duration; driving the virtual character in real time according to the audio information of the preset text, the respective target action file corresponding to each target keyword, and the time duration of driving the virtual character with each target action file, to generate the multimedia information.

In another possible implementation, when the first generating module 155 drives the virtual character in real time according to the audio information of the preset text and the respective target action file corresponding to each target keyword to generate the multimedia information, it is specifically configured to: determine a time duration of driving the virtual character with a default action file if the time duration of the target action video corresponding to the target keyword is less than the audio broadcasting duration, where the time duration of driving the virtual character with the default action file is a difference value between the audio broadcasting duration and the time duration of the target action video; drive the virtual character in real time according to the audio information of the preset text, the respective target action file corresponding to each target keyword and the default action file, to generate the multimedia information.

Optionally, the default action file drives the virtual character after the target action file corresponding to the target keyword; or the default action file drives the virtual character before the target action file corresponding to the target keyword.

In addition, in order to further improve the expressiveness of the virtual character, a broadcasting moment of an audio of a target key character in the target keyword can be aligned with a playing moment of a key frame in the target action video corresponding to the target keyword. In this case, the apparatus 150 further includes: an aligning module 156, configured to, before the first generating module drives the virtual character in real time according to the audio information of the preset text and the respective target action file corresponding to each target keyword to generate the multimedia information, align the broadcasting moment of the audio of the target key character in the target keyword with the playing moment of the key frame in the target action video corresponding to the target keyword; accordingly, when the first generating module 155 drives the virtual character in real time according to the audio information of the preset text and the respective target action file corresponding to each target keyword to generate the multimedia information, it is specifically configured to drive the virtual character in real time according to the audio information of the preset text and the respective target action file corresponding to each target keyword to generate the multimedia information, so that the audio of the target keyword and the key frame are played at the same moment.

Optionally, when the aligning module 156 aligns the broadcasting moment of the audio of the target key character in the target keyword with the playing moment of the key frame in the target action video corresponding to the target keyword, it is specifically configured to predict whether to play the target key character at a second moment after a first moment, where a time duration between the first moment and the second moment is a preset time duration; if the target key character is to be played at the second moment, align a playing moment of a start frame of the target action video corresponding to the target keyword with the first moment, where a time duration between the start frame and the key frame is the preset time duration.

Optionally, the multimedia information includes the audio information and a virtual character broadcasting video, the virtual character broadcasting video includes the respective target action video corresponding to each target keyword, and the virtual character broadcasting video corresponds to the preset text; an initial broadcasting moment of the audio information is delayed by the preset time duration compared with an initial broadcasting moment of the virtual character broadcasting video.

In addition, one or more preset action files corresponding to each target keyword may be preset, or may be generated by the above method embodiment. The generation process involves the following newly added modules.

For example, the apparatus 150 further includes a second acquiring module 157, an adjusting module 158, and a second generating module 159; among them, the second acquiring module 157 is configured to acquire a plurality of sample keywords in a sample text; and the adjusting module 158 is configured to adjust the plurality of sample keywords to obtain a sample keyword set; a second generating module 159 is configured to generate one or more preset action files corresponding to the sample keyword for each sample keyword in the sample keyword set; accordingly, when the second determining module 154 determines the target action file from one or more preset action files corresponding to the target keyword, it is specifically configured to determine a sample keyword matching the target keyword from the sample keyword set and determine the target action file from one or more preset action files corresponding to the sample keyword.

Optionally, when the second acquiring module 157 acquires a plurality of sample keywords in the sample text, it is specifically configured to: perform word segmentation processing on the sample text to obtain a plurality of word segmentations; sort the plurality of word segmentations to obtain a first sequence, where a ranking position of the word segmentation in the first sequence is related to a word frequency and an importance of the word segmentation; select, according to the ranking position of each word segmentation in the first sequence, at least some word segmentations from the first sequence as the plurality of sample keywords.

Optionally, when the adjusting module 158 adjusts the plurality of sample keywords to obtain a sample keyword set, it is specifically configured to: add sample keywords on the basis of the plurality of sample keywords and adjust the ranking position of each sample keyword to obtain a second sequence; select at least some sample keywords from the second sequence to obtain the sample keyword set.

In one possible implementation, when the second generating module 159 generates one or more preset action files corresponding to the sample keyword, it is specifically configured to record one or more action videos including a real character according to an action corresponding to the sample keyword; generate a preset action file corresponding to each action video including the real character, respectively.

In another possible implementation, when the second generating module 159 generates one or more preset action files corresponding to the sample keyword, it is specifically configured to generate one or more preset action files according to the action corresponding to the sample keyword.

The virtual character control apparatus of the embodiment shown in FIG. 15 can be used to implement the technical scheme of the above-mentioned method embodiments, and its implementation principle and technical effect are similar, which will not be repeated here.

The above describes the internal function and structure of the virtual character control apparatus, which can be realized as an electronic device. FIG. 16 is a structural schematic diagram of an embodiment of electronic device provided by an embodiment of the present disclosure. As shown in FIG. 16, the electronic device includes a memory 161 and a processor 162.

The memory 161 is configured to store programs. In addition to the above programs, the memory 161 may also be configured to store various other data to support operations on the electronic device. Examples of such data include instructions for any application programming or method operating on the electronic device, contact data, phone book data, messages, pictures, videos, and the like.

The memory 161 may be realized by any type of volatile or nonvolatile memory device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The processor 162 is coupled to the memory 161 and executes the programs stored in the memory 161 for:

acquiring one or more target keywords in a preset text;

for each of the one or more target keywords, determining a first target character and a second target character from the preset text, where the first target character corresponds to an action start position of the target keyword, and the second target character corresponds to an action end position of the target keyword;

predicting an audio broadcasting duration from the first target character to the second target character;

determining a target action file from one or more preset action files corresponding to the target keyword, where the target action file is used for driving a virtual character to perform a target action to obtain a target action video, and a time duration of the target action video matches the audio broadcasting duration;

driving the virtual character in real time according to audio information of the preset text and a respective target action file corresponding to each target keyword to generate multimedia information, where the multimedia information includes the audio information and a respective target action video corresponding to each target keyword.

Further, as shown in FIG. 16, the electronic device may also include a communication component 163, a power component 164, an audio component 165, a display 166 and other components. Only some components are shown schematically in FIG. 16, which does not mean that the electronic device only includes the components shown in FIG. 16.

Among them, the electronic device may be the server 21 or the terminal 22 as described above. When the electronic device is the server 21, the processor 162 can drive the virtual character in real time according to the audio information of the preset text and the respective target action file corresponding to each target keyword, to generate the multimedia information. Further, the communication component 163 can send the multimedia information to the terminal 22.

When the electronic device is the terminal 22, the processor 162 can drive the virtual character in real time according to the audio information of the preset text and the respective target action file corresponding to each target keyword, to generate the multimedia information. The display 166 may display the video in the multimedia information. The audio component 165 can play the audio in the multimedia information.

The communication component 163 is configured to facilitate wired or wireless communication between the electronic device and other devices. The electronic device can access wireless networks based on communication standards, such as WiFi, 2G or 3G, or their combination. In an exemplary embodiment, the communication component 163 receives a broadcasting signal or broadcast related information from an external broadcasting management system via a broadcasting channel. In an exemplary embodiment, the communication component 163 further includes a near field communication (NFC) module to facilitate short-range communication. For example, the NFC module can be implemented based on a radio frequency identification (RFID) technology, an infrared data association (IrDA) technology, an ultra-wideband (UWB) technology, a Bluetooth (BT) technology and other technologies.

The power supply component 164 provides power for various components of the electronic device. The power component 164 may include a power management system, one or more power supplies, and other components associated with generating, managing and distributing power for the electronic device.

The audio component 165 is configured to output and/or input audio signals. For example, the audio component 165 includes a microphone (MIC) configured to receive external audio signals when the electronic device is in an operation mode, such as a call mode, a recording mode and a voice recognition mode. The received audio signal may be further stored in the memory 161 or transmitted via the communication component 163. In some embodiments, the audio component 165 further includes a speaker for outputting audio signals.

The display 166 includes a screen, which may include a liquid crystal display (LCD) and a touch panel (TP). If the screen includes the touch panel, the screen may be implemented as a touch screen to receive an input signal from a user. The touch panel includes one or more touch sensors to sense touch, sliding and gestures on the touch panel. The touch sensor may not only sense a boundary of a touch or sliding action, but also detect a time duration and a pressure related to the touch or sliding operation.

In addition, an embodiment of the present disclosure also provides a computer-readable storage medium on which a computer program is stored, and the computer program is executed by a processor to realize the virtual character control method described in the above embodiments.

It should be noted that in this paper, relational terms such as "first" and "second" are only used to distinguish one entity or operation from another entity or operation, and do not necessarily require or imply that there is any such actual relationship or order between these entities or operations. Moreover, the terms "including", "containing" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one" does not exclude the existence of other identical elements in the process, method, article or device including the element.

What has been described above is only the specific embodiments of the present disclosure, so that those skilled in the art can understand or realize the present disclosure. Many modifications to these embodiments will be obvious to those skilled in the art, and the general principles defined herein can be implemented in other embodiments without departing from the spirit or scope of the present disclosure. Therefore, the present disclosure is not to be limited to the embodiments described herein, but is to be conformed to the widest scope consistent with the principles and novel features disclosed herein.

**Claims**

1. A virtual character control method, wherein the method comprises:

   acquiring one or more target keywords in a preset text;
   for each of the one or more target keywords, determining a first target character and a second target character from the preset text, wherein the first target character corresponds to an action start position of the target keyword and the second target character corresponds to an action end position of the target keyword;
   predicting an audio broadcasting duration from the first target character to the second target character;
   determining a target action file from one or more preset action files corresponding to the target keyword, wherein the target action file is used for driving a virtual character to perform a target action to obtain a target action video, and a time duration of the target action video matches the audio broadcasting duration;
   driving the virtual character in real time according to audio information of the preset text and a respective target action file corresponding to each target keyword to generate multimedia information, wherein the multimedia information comprises the audio information and a respective target action video corresponding to each target keyword.

2. The method according to claim 1, wherein the first target character is a first character of the target keyword, or the first target character is a character before the target keyword by a preset number of characters;
   the second target character is a last character of the target keyword, or the second target character is a last character of a sentence to which the target keyword belongs, or the second target character is a character before a next target keyword of the target keyword, or the second target character is a character after the last character of the target keyword by a preset number of characters.

3. The method according to claim 1, wherein predicting the audio broadcasting duration from the first target character to the second target character comprises: predicting the audio broadcasting duration from the first target character to the second target character according to a number of characters and a number of punctuation marks between the first target character and the second target character, an audio broadcasting duration of a single character and a pause duration of each punctuation mark.

4. The method according to claim 1, wherein driving the virtual character in real time according to the audio information of the preset text and the respective target action file corresponding to each target keyword to generate the multimedia information comprises:

   if the time duration of the target action video corresponding to the target keyword is greater than the audio broadcasting duration, adjusting, according to the audio broadcasting duration, a time duration of driving the virtual character with the target action file corresponding to the target keyword, so that the time duration of driving the virtual character with the target action file is the same as the audio broadcasting duration;
   driving the virtual character in real time according to the audio information of the preset text, the respective target action file corresponding to each target keyword, and the time duration of driving the virtual character with each target action file, to generate the multimedia information.

5. The method according to claim 1, wherein driving the virtual character in real time according to the audio information of the preset text and the respective target action file corresponding to each target keyword to generate the multimedia information comprises:

   if the time duration of the target action video corresponding to the target keyword is less than the audio broadcasting duration, determining a time duration of driving the virtual character with a default action file, wherein the time duration of driving the virtual character with the default action file is a difference value between the audio broadcasting duration and the time duration of the target action video;
   driving the virtual character in real time according to the audio information of the preset text, the respective target action file corresponding to each target keyword and the default action file, to generate the multimedia information.

6. The method according to claim 5, wherein the default action file drives the virtual character after the target action file corresponding to the target keyword; or the default action file drives the virtual character before the target action file corresponding to the target keyword.

7. The method according to claim 1, wherein before driving the virtual character in real time according to the audio information of the preset text and the respective target action file corresponding to each target keyword to generate the multimedia information, the method further comprises:

   aligning a broadcasting moment of an audio of a target key character in the target keyword with a playing moment of a key frame in the target action video corresponding to the target keyword;
   correspondingly, driving the virtual character in real time according to the audio information of the preset text and the respective target action file corresponding to each target keyword to generate the multimedia information comprises: driving the virtual character in real time according to the audio information of the preset text and the respective target action file corresponding to each target keyword to generate the multimedia information, so that the audio of the target keyword and the key frame are played at a same moment.

8. The method according to claim 7, wherein aligning the broadcasting moment of the audio of the target key character in the target keyword with the playing moment of the key frame in the target action video corresponding to the target keyword comprises:

   predicting whether to play the target key character at a second moment after a first moment, wherein a time duration between the first moment and the second moment is a preset time duration;
   if the target key character is to be played at the second moment, aligning a playing moment of a start frame of the target action video corresponding to the target keyword with the first moment, wherein a time duration between the start frame and the key frame is the preset time duration.

9. The method according to claim 8, wherein the multimedia information comprises the audio information and a virtual character broadcasting video, the virtual character broadcasting video comprises the respective target action video corresponding to each target keyword, and the virtual character broadcasting video corresponds to the preset text;

an initial broadcasting moment of the audio information is delayed by the preset time duration compared with an initial broadcasting moment of the virtual character broadcasting video.

10. The method according to claim 1, wherein the method further comprises:

acquiring a plurality of sample keywords in a sample text;
adjusting the plurality of sample keywords to obtain a sample keyword set;
for each sample keyword in the sample keyword set, generating one or more preset action files corresponding to the sample keyword;
correspondingly, determining the target action file from the one or more preset action files corresponding to the target keyword comprises: determining a sample keyword matching the target keyword from the sample keyword set, and determining the target action file from one or more preset action files corresponding to the sample keyword.

11. A multimedia information generating apparatus, comprising:

a first acquiring module, configured to acquire one or more target keywords in a preset text;
a first determining module, configured to determine a first target character and a second target character from the preset text for each of the one or more target keywords, wherein the first target character corresponds to an action start position of the target keyword and the second target character corresponds to an action end position of the target keyword;
a predicting module, configured to predict an audio broadcasting duration from the first target character to the second target character;
a second determining module, configured to determine a target action file from one or more preset action files corresponding to the target keyword, wherein the target action file is used for driving a virtual character to perform a target action to obtain a target action video, and a time duration of the target action video matches the audio broadcasting duration;
a first generating module, configured to drive the virtual character in real time according to audio information of the preset text and a respective target action file corresponding to each target keyword to generate multimedia information, wherein the multimedia information comprises the audio information and a respective target action video corresponding to each target keyword.

12. The apparatus according to claim 11, wherein the apparatus further comprises an aligning module, configured to align a broadcasting moment of an audio of a target key character in the target keyword with a playing moment of a key frame in the target action video corresponding to the target keyword before the first generating module drives the virtual character in real time according to the audio information of the preset text and the respective target action file corresponding to each target keyword to generate the multimedia information;

correspondingly, when driving the virtual character in real time according to the audio information of the preset text and the respective target action file corresponding to each target keyword to generate the multimedia information, the first generating module is specifically configured to:
drive the virtual character in real time according to the audio information of the preset text and the respective target action file corresponding to each target keyword to generate the multimedia information, so that the audio of the target keyword and the key frame are played at a same moment.

13. An electronic device, comprising:

a memory;
a processor; and
a computer program;
wherein the computer program is stored in the memory and configured to be executed by the processor to implement the method according to any one of claims 1-10.

14. A computer-readable storage medium having a computer program stored thereon, wherein when the computer program is executed by a processor, the method according to any one of claims 1-10 is implemented.

Acquiring one or more target keywords in a preset text  ⌇S101

For each of the one or more target keywords, determining a first target character and a second target character from the preset text, where the first target character corresponds to an action start position of the target keyword and the second target character corresponds to an action end position of the target keyword  ⌇S102

Predicting an audio broadcasting duration from the first target character to the second target character  ⌇S103

Determining a target action file from one or more preset action files corresponding to the target keyword, where the target action file is used for driving the virtual character to perform a target action to obtain a target action video, and a time duration of the target action video matches the audio broadcasting duration  ⌇S104

Driving the virtual character in real time according to audio information of the preset text and a respective target action file corresponding to each target keyword, to generate multimedia information, where the multimedia information includes the audio information and a respective target action video corresponding to each target keyword  ⌇S105

FIG. 1

21

22

FIG. 2

Today, the temperature begins to drop, every one please take precautions

↑ ↑

First target character        Second target character

FIG. 3

First target character

Second target character

Today, the temperature begins to drop, and in the day after tomorrow, there will be snowstorms, every one please take precautions

First target character

Second target character

FIG. 4

EP 4 468 246 A1

Today, the temperature begins to drop, and in the day after tomorrow, there will be snowstorms, every one please take precautions

First target character    Second target character    First target character    Second target character

FIG. 5

Acquiring one or more target keywords in a preset text — S601

For each of the one or more target keywords, determining a first target character and a second target character from the preset text, where the first target character corresponds to an action start position of the target keyword and the second target character corresponds to an action end position of the target keyword — S602

Predicting the audio broadcasting duration from the first target character to the second target character according to the number of characters and the number of punctuation marks between the first target character and the second target character, an audio broadcasting duration of a single character and a pause duration of each punctuation mark — S603

Determining a target action file from one or more preset action files corresponding to the target keyword, where the target action file is used for driving the virtual character to perform a target action to obtain a target action video, and a time duration of the target action video matches the audio broadcasting duration — S604

Driving the virtual character in real time according to the audio information of the preset text and the respective target action file corresponding to each target keyword, so as to generate multimedia information, where the multimedia information includes the audio information and the respective target action video corresponding to each target keyword — S605

FIG. 6

First target character        Second target character

Today, the temperature begins to drop, and in the day after tomorrow, there will be snowstorms, every one please take precautions

            First target character        Second target character

Audio broadcasting duration t

Time duration of the target action video

Interruption position

FIG. 7

First target character          Second target character

Today, the temperature begins to drop, and in the day after tomorrow, there will be snowstorms, every one please take precautions

Audio broadcasting duration t

First target character         Second target character

Time duration of the target action video

t−T

T

FIG. 8

First target character

Second target character

Today, the temperature begins to drop, and in the day after tomorrow, there will be snowstorms, every one please take precautions

First target character

Second target character

Audio broadcasting duration t

Time duration of the target action video

T                    t−T

FIG. 9

Acquiring one or more target keywords in a preset text — S1001

For each of the one or more target keywords, determining a first target character and a second target character from the preset text, where the first target character corresponds to an action start position of the target keyword and the second target character corresponds to an action end position of the target keyword — S1002

Predicting an audio broadcasting duration from the first target character to the second target character — S1003

Determining a target action file from one or more preset action files corresponding to the target keyword, where the target action file is used for driving a virtual character to perform a target action to obtain a target action video, and a time duration of the target action video matches the audio broadcasting duration — S1004

Aligning a broadcast moment of an audio of a target key character in the target keyword with a playing moment of a key frame in the target action video corresponding to the target keyword — S1005

Driving the virtual character in real time according to the audio information of the preset text and the respective target action file corresponding to each target keyword to generate the multimedia information, so that the audio of the target key character and the key frame are played at the same moment, where the multimedia information includes the audio information and the respective target action video corresponding to each target keyword — S1006

FIG. 10

The athlete got the highest score in the whole game today, and the key to high score lies in this one action has been completed

|←————————————————————————————————————————→|  |←———————————————————————→|
          Default action or default posture                Referential action

↓

TTS time sequence:   |←→| 500ms   The athlete got the highest score in the whole game today, and the key to high score lies in this one action has been completed

Decision action: Default action

Decision action: Referential action

Action time sequence:

Initial moment

|←———→| 500ms

First moment    Second moment

Start raising hand    Finger pointing to a specific object

FIG. 11

Acquiring a plurality of sample keywords in a sample text S1201

Adjusting the plurality of sample keywords to obtain a sample keyword set S1202

For each sample keyword in the sample keyword set, generating one or more preset action files corresponding to the sample keyword S1203

FIG. 12

Current broadcasting document → TTS module

Complete set of broadcasting document

Key information location and sorting algorithm

Action decision algorithm

Current broadcasting audio

Sorted list of sample keywords

Algorithm for aligning the action key frame with the audio key character

Preset action file set

One or more preset action files corresponding to each sample keyword

Target action file

Rendering and driving of a virtual character

Multimedia information

FIG. 13

FIG. 14

FIG. 15

FIG. 16

## INTERNATIONAL SEARCH REPORT

| | International application No. |
| --- | --- |
| | **PCT/CN2023/073010** |

| A. | CLASSIFICATION OF SUBJECT MATTER |
| --- | --- |
| | G06T13/20(2011.01)i;G06F16/33(2019.01)n;G06F16/432(2019.01)n |

According to International Patent Classification (IPC) or to both national classification and IPC

| B. | FIELDS SEARCHED |
| --- | --- |

Minimum documentation searched (classification system followed by classification symbols)
    IPC： G06T13/-; G06F16/-

Documentation searched other than minimum documentation to the extent that such documents are included in the fields searched

Electronic data base consulted during the international search (name of data base and, where practicable, search terms used)
    CNTXT; ENTXT; ENTXTC; DWPI; CNKI: 虚拟, 人物, 关键词, 目标, 位置, 动作, 音频, 广播, virtual, character, keyword, target, position, action, audio, broadcast

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 114596391 A (ALIBABA (CHINA) CO., LTD.) 07 June 2022 (2022-06-07)<br>    claims 1-14 | 1-14 |
| Y | CN 110941954 A (SHENZHEN ZHUIYI TECHNOLOGY CO., LTD.) 31 March 2020<br>(2020-03-31)<br>    claims 1-12, and description, paragraphs [0032]-[0158] | 1-14 |
| Y | CN 113761865 A (BEIJING BYTEDANCE NETWORK TECHNOLOGY CO., LTD.) 07<br>December 2021 (2021-12-07)<br>    claims 1-17, and description, paragraphs [0035]-[0130] | 1-14 |
| Y | CN 112988100 A (SHANGHAI ZHANGMEN TECHNOLOGY CO., LTD.) 18 June 2021<br>(2021-06-18)<br>    claims 1-15, and description, paragraphs [0018]-[0111] | 1-14 |
| Y | CN 112417102 A (INSTITUTE OF AUTOMATION, CHINESE ACADEMY OF SCIENCES<br>et al.) 26 February 2021 (2021-02-26)<br>    claims 1-10, and description, paragraphs [0031]-[0178] | 1-14 |
| A | US 2021004603 A1 (BAIDU USA LLC) 07 January 2021 (2021-01-07)<br>    entire document | 1-14 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 March 2023** | **23 March 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

International application No.

**PCT/CN2023/073010**

| Patent document cited in search report | | | Publication date (day/month/year) | Patent family member(s) | | | Publication date (day/month/year) |
|---|---|---|---|---|---|---|---|
| CN | 114596391 | A | 07 June 2022 | None | | | |
| CN | 110941954 | A | 31 March 2020 | CN | 110941954 | B | 23 March 2021 |
| CN | 113761865 | A | 07 December 2021 | None | | | |
| CN | 112988100 | A | 18 June 2021 | None | | | |
| CN | 112417102 | A | 26 February 2021 | None | | | |
| US | 2021004603 | A1 | 07 January 2021 | US | 11036996 | B2 | 15 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210061213X